# EUROPÄISCHE PATENTSCHRIFT

(11) **EP 1 345 393 B1**
(45) Veröffentlichungstag und Bekanntmachung des Hinweises auf die Patenterteilung: **01.03.2006**
(21) Anmeldenummer: 02005614.9
(22) Anmeldetag: 12.03.2002
(51) Int. Cl.: H04M 1/247, G06F 3/033

(54) **USB-Telefon, sowie Verfahren und Bildschirmmaske zur Bedienung eines solchen Telefons**
USB-telephone, method and graphical interface for operating such a telephone
Téléphone USB, procédé et interface graphique pour le fonctionnement d'un tel téléphone

(43) Veröffentlichungstag der Anmeldung: 17.09.2003
(60) Teilanmeldung: 04020700.3
(73) Patentinhaber: Tenovis GmbH & Co. KG, 60326 Frankfurt am Main (DE)
(72) Erfinder: Brunner, Udo, 60437 Frankfurt (DE); Ruff, Gerhard, 63303 Dreieich (DE); Penschuck, Werner, 60388 Frankfurt Main (DE); Koch, Werner, 63303 Dreieich (DE); Vogel, Uwe, 65551 Limburg (DE); Froelich, Martin, 63517 Rodenbach (DE); Freisleben, Walter, 61118 Bad Vibel (DE)
(74) Vertreter: Walkenhorst, Andreas

(56) Entgegenhaltungen:
- DE-A- 10 020 424
- DE-A- 19 743 459
- US-A- 5 890 178
- US-A- 6 091 803

## Beschreibung

Die Erfindung betrifft ein USB-Telefon, sowie ein Verfahren und eine Bildschirmmaske zur Bedienung eines Telefons mittels einer CTI-Applikation.

USB-Telefone sind Telefone mit einer USB-Schnittstelle zur Verbindung mit einem Computer, die üblicherweise mittels einer auf dem Computer ablaufenden CTI-Applikation bedient werden, wobei der Computer an ein Netz angebunden ist, das USB-Telefon jedoch nicht direkt. Derartige Telefone und CTI-Applikationen sind bereits bekannt.

Es besteht ein Bedarf an Telefonen, die nicht direkt an ein Telefonnetz angeschlossen sind, sondern über einen Computer. Derartige Telefone werden typischerweise mittels einer auf dem Computer ablaufenden CTI-Applikation bedient. Eine USB-Schnittstelle eignet sich für die Übertragung von sowohl digitalen Sprachsignalen als auch einem elektrischen Versorgungsstrom. Dies erlaubt es, eine AD- und DA-Wandlung der Sprachsignale in dem USB-Telefon vorzunehmen und nur digitale Daten zum Computer zu übertragen. Dadurch kann man Störungen durch das Zusammenspiel des externen Telefons mit dem Computer aufgrund verschiedenartig konfigurierter Hardware vermeiden.

Ein USB-Telefon nach dem Stand der Technik, beispielsweise gemäß der Druckschrift DE 100 20 424 A1, hat einen Handapparat und ein Basisteil, das eine USB-Schnittstelle aufweist, und wird benutzt zusammen mit einem Computer mit einer Eingabeeinrichtung zur Bedienung einer CTI-Applikation. Das Basisteil hat einen Lautsprecher zur Rufanzeige, aber keine Tastatur. Eine CTI-Applikation nach dem Stand der Technik umfasst eine Bildschirmmaske, die unter einer Titelleiste flächenmäßig verteilt Buttons zur Bedienung des Telefons aufweist. Die Bildschirmmaske kann als Fenster insgesamt verkleinert werden zu einem Button bzw. Symbol, dann sind jedoch die Telefon-Bedienfunktionen nicht mehr durch anklicken aufrufbar.

Die US 6,091,803 offenbart ein USB-Telefon, das physikalisch in die Leitung zwischen einer Nebenstellenanlage und einem Computer geschaltet wird. Im Normalfall erfolgt die Bedienung mittels des Computers. Weist dieser eine Störung auf, so erfolgt die Bedienung über Tasten am Telefon.

Die USB-Telefone nach dem Stand der Technik haben den Nachteil, dass viele Bedienungselemente vorhanden sind, die nur teilweise sowohl an einer Eingabeeinrichtung als auch am Terminal bedienbar sind, was teilweise auch noch vom Bedienstatus des Telefons oder von der Bildschirmmaske abhängt. Dies erschwert die Benutzung und kann einen neuen Interessenten von der Benutzung eines USB-Telefons abhalten. Die Bildschirmmasken nach dem Stand der Technik nehmen einen großen Raum auf der Bildschirmoberfläche ein, was wenig Platz für andere Anwendungen läßt.

Der Erfindung liegt daher die Aufgabe zugrunde, die Bedienung eines USB-Telefons zu vereinfachen und die Bildschirmmaske zu verkleinern.

Diese Aufgabe wird durch ein Verfahren und eine Vorrichtung mit den Merkmalen der unabhängigen Patentansprüche gelöst. Bevorzugte Ausgestaltungen der Erfindung ergeben sich aus den abhängigen Ansprüchen.

Eine Kernmotivation der Erfindung liegt darin, ein USB-Telefon zu schaffen, das nur wenige ausgewählte Anzeige- und Bedienelemente aufweist, diese aber an geeigneten Stellen sowohl auf dem Telefon als auch auf der Bildschirmmaske. Erfindungsgemäß wurde erkannt, dass es nur wenige Telefonfunktionen gibt, die zum effizienten Nutzen und komfortablen Arbeiten auf dem Basisteil angezeigt werden und auch bedienbar sein sollten. Dazu gehört beispielsweise die Anpassung der Empfangslautstärke.

Bei einem erfindungsgemäßen USB-Telefon mit einem Handapparat und einem Basisteil, das eine USB-Schnittstelle, Tasten und eine Anzeige aufweist, zur Benutzung mit einem Computer mit einer Eingabeeinrichtung zur Bedienung einer CTI-Applikation, können aufgrund der Steuerung Bedienfunktionen des USB-Telefons wahlweise durch die Tasten oder die Eingabeeinrichtung aktiviert werden, und ein Bedien-Zustand des USB-Telefons wird sowohl auf der Anzeige als auch auf einem Computerbildschirm angezeigt.

Dabei sind die Tasten als mit der Hand vom Benutzer bedienbare Tasten für Bedienfunktionen zu verstehen und umfassen einen Gabelumschalter nicht. Diese Bedien-Tasten sind in einer bevorzugten Ausgestaltung der Erfindung ebenfalls Elemente der Anzeige für den auf die jeweilige Bedienfunktion bezogenen Bedien-Zustand.

Nach einer anderen bevorzugten Ausgestaltung des erfindungsgemäßen USB-Telefons weist das Basisteil keine Zifferntasten zum Wählen auf, weil das Wählen über die Eingabeeinrichtung des Computers erfolgt.

Das USB-Telefon wird unterstützt durch eine erfindungsgemäße Bildschirmmaske zur Bedienung des USB-Telefons mittels einer CTI-Applikation. Diese Bildschirmmaske ist auf eine Titelleiste reduzierbar und in einem reduzierten Bildschirmmasken-Zustand Buttons aufweist, die mögliche Bedienfunktionen abhängig vom Bedien-Zustand des USB-Telefons anzeigen, und über die diese Bedienfunktionen per Eingabemöglichkeiten des PCs, z.B. Mausklick betätigbar sind.

In einem Verfahren gemäß der Erfindung zur Bedienung eines USB-Telefons können Bedienfunktionen des USB-Telefons wahlweise durch die Tasten oder die Eingabeeinrichtung aktiviert werden und ein Bedien-Zustand des USB-Telefons wird sowohl auf der Anzeige als auch auf einem Computerbildschirm angezeigt. Dabei werden die Bedienfunktionen bevorzugt abhängig vom Bedien-Zustand angeboten und/oder angezeigt.

Diesem ein Telefon betreffendes Verfahren entspricht auf der Computer-Seite ein erfindungsgemäßes Verfahren zur Bedienung einer CTI-Applikation. Dabei wird auf einem Computerbildschirm zur Bedienung eines Telefons eine Bildschirmmaske auf eine Titelleiste reduziert. Diese Titelleiste weist im reduzierten Bildschirmmasken-Zustand Buttons auf, die mögliche Bedienfunktionen abhängig vom Bedien-Zustand des Telefons anzeigen. Die Buttons sind mit den Eingabemöglichkeiten des PCs betätigbar, alternativ zur Bedienung über die Telefontasten. Der Begriff Telefon ist hier weit zu verstehen und umfaßt auch Telefone, die z.B. nur aus einer an einen Computer angeschlossenen Sprechgarnitur bzw. Headset bestehen.

Weitere vorteilhafte Ausführungsformen ergeben sich aus den weiteren Unteransprüchen und aus der nachfolgenden Beschreibung eines bevorzugten Ausführungsbeispiels, das anhand der Abbildungen näher erläutert wird. Hierbei zeigen:
Fig. 1 eine schematische Darstellung eines USB-Telefons gemäß der Erfindung;
Fig. 2 schematisch einen Bildschirm mit einer Bildschirmmaske einer CTI Applikation gemäß der Erfindung; und
Fig. 3 schematisch einen Bildschirm mit einer verkleinerten Bildschirmmaske einer CTI Applikation gemäß der Erfindung.

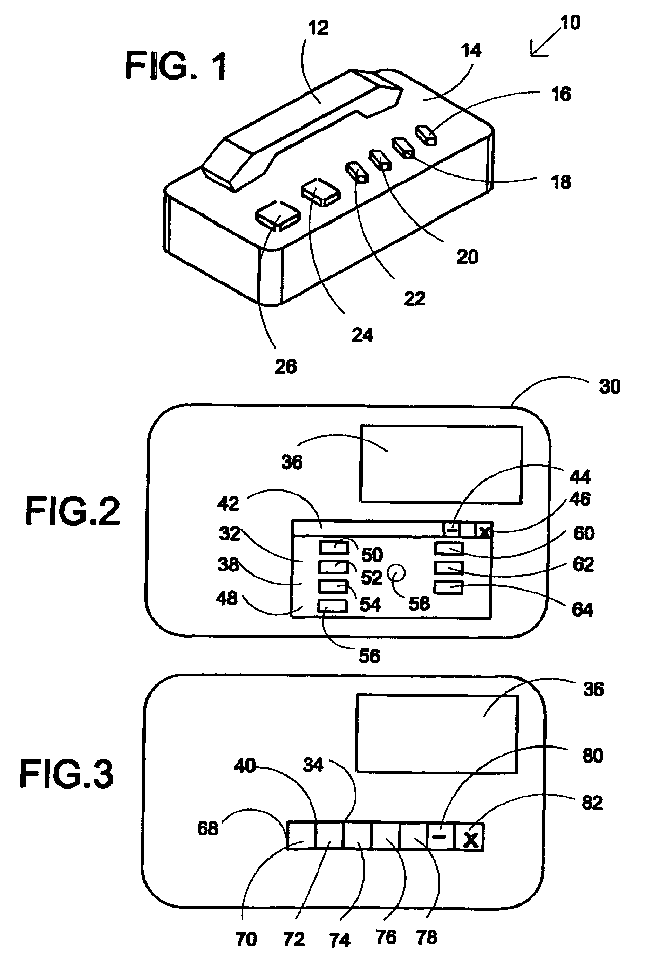

Fig. 1 zeigt in einer schematischen Darstellung ein USB-Telefon 10 mit einem Handapparat 12 und einem Basisteil 14, das eine USB-Schnittstelle, Tasten 16, 18, Anzeige-Tasten 20, 22, eine optische Anzeige 24 und einen Lautsprecher 26 aufweist. Die Taste 16 dient der Erhöhung und die Taste 18 der Reduzierung der Lautstärke. Die Tasten 16, 18, haben Bedien-Funktionen, jedoch keine Anzeigefunktion. An das USB-Telefon 10 ist ein Headset (Sprechgarnitur) anschließbar. Die Anzeige-Taste 20 dient als Taste mit Bedien-Funktion der Umschaltung zwischen Handapparat 12 und Headset und als Anzeige der Zustandsanzeige des Bedien-Zustands, ob das Headset anstelle des Handapparats 12 eingeschaltet ist. Über die Anzeige-Taste 22 wird als Taste mit Bedien-Funktion "Mute2" das jeweils in Betrieb befindliche Mikrofon des Handapparats 12 bzw. des Headsets ein- oder ausgeschaltet, und als Anzeige der Bedien-Zustand "Mute"- falls aktiv - angezeigt. Über die optische Anzeige 24 und den Lautsprecher 26 werden ankommende Rufe gemeldet. Das USB-Telefon 10 weist keine Zifferntasten zum Wählen auf. Das Basisteil 14 hat einen Gabelumschalter.

Das USB-Telefon 10 wird benutzt zusammen mit einem (nicht gezeigten) Computer mit einer Eingabeeinrichtung zur Bedienung einer CTI-Applikation. Das USB-Telefon 10 weist eine Steuerung auf, so dass Bedienfunktionen des USB-Telefons wahlweise durch die Tasten oder die Eingabeeinrichtung aktiviert werden können und ein Bedien-Zustand des USB-Telefons sowohl auf der Anzeige als auch auf einem Computerbildschirm angezeigt wird. der Computer ist an ein Netz angebunden, das USB-Telefon 10 jedoch nicht direkt.

Fig. 2 zeigt schematisch einen Bildschirm 30 mit mehreren Fenstern 32, 36, von denen Fenster 32 eine Bildschirmmasken 38 von einer CTI Applikation eines USB-Telefons darstellen und Fenster 36 eine weitere Computerapplikation betrifft. Die Bildschirmmaske 38 dient der Steuerung eines USB-Telefons wie das USB-Telefon 10 gemäß der Erfindung und wird in Verbindung mit diesem beschrieben.

Zunächst wird die Bildschirmmaske 38 zur Steuerung des USB-Telefons 10 beschrieben. Die Bildschirmmaske 38 weist eine Titelleiste 42 mit Buttons 44, 46 zur Bestimmung der Fenstergröße auf. Mit Button 44 wird das Fenster 32 verkleinert auf die Größe des Fensters 34, und mit Button 46 wird die CTI Applikation geschlossen. Die Bildschirmmaske 38 weist weiterhin ein Arbeits-Feld mit Bedien- und Anzeigeelementen auf. Diese umfassen die Buttons 50, 52, 54, 56, welche den Tasten 16, 18 und Anzeige-Tasten 20, 22 des USB-Telefons 10 funktionsmäßig entsprechen, und das Anzeigefeld 58, welches der optischen Anzeige 24 des USB-Telefons 10 entspricht. Weitere Buttons 60, 62, 64 mit Anzeige- und/oder Bedienfunktion gehören zur CTI Applikation und sind ausschließlich über Eingabeeinrichtungen des Computers zu bedienen.

Die Benutzung des USB-Telefons 10 mit der Bildschirmmaske 38 wird anhand eines einkommenden Rufs bei aufgelegtem Handapparat 12 erläutert. Der einkommende Ruf wird simultan über die optische Anzeige 24 und den Lautsprecher 26 am USB-Telefon 10 sowie über das Anzeigefeld 58 in der Bildschirmmaske angezeigt. Der Ruf wird durch Abheben des Handapparats 12 angenommen, wobei der Gabelumschalter im Basisteil 14 betätigt wird. Nun kann die Lautstärke eines Lautsprechers im Handapparat 12 über die Tasten 16, 18 oder die Korrespondierenden Buttons 50, 52 verändert werden. Es könnte auch die aktuelle Lautstärke in einem Anzeigeelement auf dem Bildschirm analog dargestellt werden. Falls nun die diesseitigen Mikrofonsignale unterdrückt werden sollen, so kann die Anzeige-Taste 22 oder der korrespondierende Button 56 per Mausklick betätigt werden. Dann leuchtet die Anzeige-Taste 22 und der Button 56 erhellt sich oder blinkt, um die Aktivität der "Mute"-Funktion anzuzeigen. Die "Mute"-Funktion kann durch erneutes Betätigen der Anzeige-Taste 22 oder des korrespondierenden Buttons 56 ausgeschaltet werden, worauf auch deren Anzeigen zurückgesetzt werden.

Das Telefonat wird durch Auflegen des Handapparats 12 beendet.

Bei angeschlossenem Headset kann der Ruf alternativ zum Handapparats 12 durch Betätigen der Anzeige-Taste 20 oder des dazu korrespondierenden Buttons 54 auf der Bildschirmmaske 38 per Mausklick angenommen werden. Dann leuchtet die Anzeige-Taste 20 und der Button 54 erhellt sich oder blinkt, um die Aktivität des Headsets anzuzeigen. Das Telefonat würde dann durch erneutes Betätigen der Anzeige-Taste 20 oder des dazu korrespondierenden Buttons 54 bei abgehobenem Handapparat 12 auf diesen übergeben bzw. bei aufgelegtem Handapparat 12 beendet.

Bei einem ausgehenden Ruf kann wahlweise zuerst der Handapparat 12 vom Basisteil 14 abgenommen oder eine Rufnummer eingegeben bzw. ausgewählt werden, die im Button 64 angezeigt wird. Jedenfalls wird mit Abnehmen des Handapparats eine Signalisierung des ausgehenden Rufs ausgelöst. Nach Annahme des Rufs durch den Angerufenen erfolgt die weitere Bedienung des USB-Telefons 10 wie beim eingehenden Ruf beschrieben.

Die Bedienfunktionen der Anzeige-Tasten 20, 22 sind also vom Bedien-Zustand des USB-Telefons 10 abhängig.

Die Bildschirmmaske 38 zur Bedienung des USB-Telefons 10 mittels einer CTI-Applikation ist durch Betätigen des Buttons 44 reduzierbar.

Fig. 3 zeigt schematisch einen Bildschirm 30 mit mehreren Fenstern 34, 36, von denen Fenster 34 eine Bildschirmmaske 40 von einer CTI Applikation eines USB-Telefons in reduziertem Zustand darstellt und Fenster wieder 36 eine weitere Computerapplikation betrifft. Die Bildschirmmaske 40 ist aus der Bildschirmmaske 38 aus FIG. 2 durch Betätigung des Buttons 44 hervorgegangen. Die Bildschirmmaske 40 ist eine Bildschirmplatz sparende Maske, die nur wesentliche Funktionen zur Steuerung des USB-Telefons 10 für einen eingehenden Ruf aufweist. Daher fehlen die zum Wählen und für Komfort vorgesehenen Buttons 60, 62, 64 der Bildschirmmaske 38. Die Buttons 70, 72, 74, 76 der Bildschirmmaske 40 entsprechen den Tasten 50, 52, 54, 56 der Bildschirmmaske 38, und entsprechen also den Tasten 16, 18 und Anzeige-Tasten 20, 22 des USB-Telefons 10 funktionsmäßig. Die Buttons 70, 72, 74, 76 zeigen mögliche Bedienfunktionen abhängig vom Bedien-Zustand des USB-Telefons an und sind über die diese Bedienfunktionen per Mausklick betätigbar. Bedienfunktionen des USB-Telefons können wahlweise durch die Tasten oder die Eingabeeinrichtung aktiviert werden und ein Bedien-Zustand des USB-Telefons wird sowohl auf der Anzeige als auch auf einem Computerbildschirm angezeigt. Im Feld 78 wird die aktuell eingestellte Lautstärke angezeigt. Mit Button 80 kann die große Bildschirmmaske 38 wieder hergestellt werden und mit Button 82 kann die CTI Applikation beendet werden.

Die Ausführung der Erfindung ist nicht auf das beschriebene Beispiel und die oben hervorgehobenen Aspekte beschränkt, sondern im Rahmen der Ansprüche ebenso in einer Vielzahl von Abhandlungen möglich, die im Rahmen fachgemäßen Handelns liegen.

## Patentansprüche

1. USB-Telefon (10) mit einem Handapparat (12) und einem Basisteil(14), das eine USB-Schnittstelle aufweist, zur Benutzung mit einem Computer mit einer Eingabeeinrichtung zur Bedienung einer CTI-Applikation, **gekennzeichnet durch** eine Steuerung, eine Anzeige (20, 22, 24, 26) und Tasten(16, 18, 20, 22) im Basisteil derart, dass Bedienfunktionen des USB-Telefons wahlweise **durch** die Tasten oder die Eingabeeinrichtung aktivierbar sind und ein Bedien-Zustand des USB-Telefons sowohl auf der Anzeige als auch auf einem Computerbildschirm (30) anzeigbar ist, wenn sowohl das USB-Telefon als auch der Computer eingeschaltet sind.

2. USB-Telefon nach Anspruch 1, **dadurch gekennzeichnet, dass** das Basisteil (14) einen Lautsprecher (26) aufweist.

3. USB-Telefon nach Anspruch 1 oder 2, **dadurch gekennzeichnet, dass** das Basisteil (14) keine Zifferntasten zum Wählen aufweist.

4. USB-Telefon nach einem der Ansprüche 1 bis 3, **dadurch gekennzeichnet, dass** das Basisteil (14) einen Anschluss für ein Headset, eine Taste zum Schalten des Headsets und eine Anzeige zum Anzeigen eines Schalt-Zustands des Headsets aufweist.

5. USB-Telefon nach einem der Ansprüche 1 bis 4, **dadurch gekennzeichnet, dass** das Basisteil (14) eine Anzeige (24, 26) zum Anzeigen eines eingehenden Rufs aufweist.

6. USB-Telefon nach Anspruch 5, **dadurch gekennzeichnet, dass** die Anzeige (24) zum Anzeigen eines eingehenden Rufs eine optische Anzeige ist.

7. USB-Telefon nach einem der Ansprüche 1 bis 6, **dadurch gekennzeichnet, dass** durch die Tasten (20, 22, 24, 26) eine vom Bedien-Zustand abhängige Bedienfunktion aktivierbar ist.

8. USB-Telefon nach einem der Ansprüche 1 bis 7, **dadurch gekennzeichnet, dass** Tasten (24, 26) Elemente der Anzeige sind für den auf die jeweilige Bedienfunktion bezogenen Bedien-Zustand.

9. USB-Telefon nach einem der Ansprüche 1 bis 8, **dadurch gekennzeichnet, dass** das Basisteil (14) einen Gabelumschalter aufweist.

10. Verfahren zur Bedienung eines USB-Telefons (10) mit einem Handapparat (12) und einem Basisteil (14), einer USB-Schnittstelle, Tasten (16, 18, 20, 22) und einer Anzeige (20, 22, 24, 26), zur Benutzung mit einem Computer mit einer Eingabeeinrichtung mittels einer CTI-Applikation, **dadurch gekennzeichnet, dass** Bedienfunktionen des USB-Telefons wahlweise durch die Tasten oder die Eingabeeinrichtung aktiviert werden und ein Bedien-Zustand des USB-Telefons sowohl auf der Anzeige als auch auf einem Computerbildschirm angezeigt wird, wenn sowohl das USB-Telefon als auch der Computer eingeschaltet sind.

11. Verfahren nach Anspruch 10, **dadurch gekennzeichnet, dass** die Bedienfunktionen abhängig vom Bedien-Zustand angeboten werden.

12. Verfahren nach einem der Ansprüche 10 oder 11, **dadurch gekennzeichnet, dass** die Bedienfunktionen abhängig vom Bedien-Zustand angezeigt werden.

## Claims

1. USB telephone (10) with a handset (12) and a base part (14), which has a USB interface, for use with a computer with an input device for operator control of a CTI application, **characterized by** a controller, an indicator (20, 22, 24, 26) and keys (16, 18, 20, 22) in the base part such that operator control functions of the USB telephone can be activated using either the keys or the input device and an operator control condition of the USB telephone can be indicated both on the indicator and on a computer screen (30) when both the USB telephone and the computer have been turned on.

2. USB telephone according to Claim 1, **characterized in that** the base part (14) has a loudspeaker (26).

3. USB telephone according to Claim 1 or 2, **characterized in that** the base part (14) has no numerical keys for dialling.

4. USB telephone according to one of Claims 1 to 3, **characterized in that** the base part (14) has a connection for a headset, a key for operating the headset and an indicator for indicating an operating condition of the headset.

5. USB telephone according to one of Claims 1 to 4, **characterized in that** the base part (14) has an indicator (24, 26) for indicating an incoming call.

6. USB telephone according to Claim 5, **characterized in that** the indicator (24) for indicating an incoming call is a visual indicator.

7. USB telephone according to one of Claims 1 to 6, **characterized in that** the keys (20, 22, 24, 26) can be used to activate an operator control function which is dependent on the operator control condition.

8. USB telephone according to one of Claims 1 to 7, **characterized in that** keys (24, 26) are elements of the indicator for the operator control condition relating to the respective operator control function.

9. USB telephone according to one of Claims 1 to 8, **characterized in that** the base part (14) has a cradle switch.

10. Method for operator control of a USB telephone (10) with a handset (12) and a base part (14), a USB interface, keys (16, 18, 20, 22) and an indicator (20, 22, 24, 26), for use with a computer with an input device using a CTI application, **characterized in that** operator control functions of the USB telephone are activated using either the keys or the input device and an operator control condition of the USB telephone is indicated both on the indicator and on a computer screen when both the USB telephone and the computer have been turned on.

11. Method according to Claim 10, **characterized in that** the operator control functions are provided on the basis of the operator control condition.

12. Method according to either of Claims 10 and 11, **characterized in that** the operator control functions are indicated on the basis of the operator control condition.

## Revendications

1. Téléphone USB (10) ayant un combiné (12) et une embase (14), qui comporte une interface USB à utiliser avec un ordinateur ayant un dispositif d'entrée pour faire fonctionner une application CTI, **caractérisé par** une commande, un affichage (20, 22, 24, 26) et des touches (16, 18, 20, 22) dans l'embase, de façon à pouvoir activer à volonté les fonctions de service du téléphone USB par les touches ou par le dispositif d'entrée et de façon à pouvoir afficher un état de service du téléphone USB à la fois sur l'affichage et sur un écran (30) de l'ordinateur lorsqu'à la fois le téléphone USB et l'ordinateur sont branchés.

2. Téléphone USB suivant la revendication 1, **caractérisé en ce que** l'embase (14) comporte un haut-parleur (26).

3. Téléphone USB suivant la revendication 1 ou 2, **caractérisé en ce que** l'embase (14) n'a pas de touches de chiffre pour la numérotation.

4. Téléphone USB suivant l'une des revendications 1 à 3, **caractérisé en ce que** l'embase (14) a une borne pour un combiné d'opératrice, une borne pour brancher le combiné d'opératrice et un affichage pour afficher un état de branchement du combiné d'opératrice.

5. Téléphone USB suivant l'une des revendications 1 à 4, **caractérisé en ce que** l'embase (14) a un affichage (24, 26) pour annoncer un appel entrant.

6. Téléphone USB suivant la revendication 5, **caractérisé en ce que** l'affichage (24) d'un appel entrant est un affichage optique.

7. Téléphone USB suivant l'une des revendications 1 à 6, **caractérisé en ce qu'**une fonction de service dépendant de l'état de service peut être activée par les touches.

8. Téléphone USB suivant l'une des revendications 1 à 7, **caractérisé en ce que** des touches (24, 26) sont des éléments de l'affichage pour l'état de service rapporté à la fonction de service respective.

9. Téléphone USB suivant l'une des revendications 1 à 8, **caractérisé en ce que** l'embase (14) a un support commutateur.

10. Procédé pour faire fonctionner un téléphone USB (10) ayant un combiné (12) et une embase (14), une interface USB, des touches (16, 18, 20, 22) et un affichage (20, 22, 24, 26) pour l'utilisation avec un ordinateur ayant un dispositif d'entrée au moyen d'une application CTI, **caractérisé en ce que** l'on active des fonctions de service du téléphone USB à volonté par les touches ou par le dispositif d'entrée et on affiche un état de service du téléphone USB à la fois sur l'affichage et sur un écran de l'ordinateur lorsqu'à la fois le téléphone USB et l'ordinateur sont branchés.

11. Procédé suivant la revendication 10, **caractérisé en ce que** l'on offre les fonctions de service en fonction de l'état de service.

12. Procédé suivant l'une des revendications 10 ou 11, **caractérisé en ce que** l'on affiche les fonctions de service en fonction des états de service.
